# EUROPÄISCHE PATENTSCHRIFT

(11) **EP 2 049 818 B1**
(45) Veröffentlichungstag und Bekanntmachung des Hinweises auf die Patenterteilung: **26.12.2012**
(21) Anmeldenummer: 07764876.4
(22) Anmeldetag: 27.06.2007
(51) Int. Cl.: F16H 59/02, F16H 59/10

(54) **SCHALTVORRICHTUNG FÜR EIN AUTOMATISIERTES ODER AUTOMATISCHES GETRIEBE**
SHIFT DEVICE FOR AN AUTOMATED OR AUTOMATIC TRANSMISSION
DISPOSITIF DE CHANGEMENT DE VITESSES POUR UNE BOÎTE DE VITESSES AUTOMATISÉE OU AUTOMATIQUE

(30) Priorität: 28.07.2006 DE 102006034939
(43) Veröffentlichungstag der Anmeldung: 22.04.2009
(73) Patentinhaber: Dr. Ing. h.c. F. Porsche AG, 70435 Stuttgart (DE)
(72) Erfinder: SICKART, Michael, 71296 Heimsheim (DE); FUNK, Michael, 70469 Stuttgart (DE)
(86) Internationale Anmeldenummer: PCT/EP2007/005666
(87) Internationale Veröffentlichungsnummer: WO 2008/011946

(56) Entgegenhaltungen:
- EP-A- 0 718 527
- EP-A- 1 719 934
- DE-A1- 10 059 277
- DE-A1- 19 737 296

## Beschreibung

Die vorliegende Erfindung betrifft eine Schaltvorrichtung für ein automatisiertes oder automatisches Getriebe gemäß dem Oberbegriff des Anspruchs 1.

Aus der DE 197 37 296 C2 ist eine Schaltvorrichtung bekannt, bei welcher der Schalthebel in einer Schaltgasse verstellbar ist, die vier nebeneinander angeordnete stabile Schaltstellungen aufweist, die jeweils einer Automatikschaltstufe des Getriebes zugeordnet sind. An eine der außen liegenden stabilen Schaltstellungen, die als Manual-Schaltstufe ausgestaltet ist, grenzen drei labile Schaltstellungen an, von denen die eine als Vorwärts-Schaltstufe ausgestaltet und in der Schaltgasse angeordnet ist. Die beiden anderen labilen Schaltstellungen sind beiderseits der stabilen Manualschaltstellung in einer Quergasse angeordnet, welche die Schaltgasse in der Manualschaltstellung kreuzt. Die beiden labilen Schaltstellungen der Quergasse dienen zum Hoch- bzw. Runterschalten der Gänge. Die anderen stabilen Schaltstellungen der Schaltgasse sind eine Leerlauf-Schaltstufe, eine Rückwärts-Schaltstufe und eine Park-Schaltstufe.

Die vorliegende Erfindung beschäftigt sich mit dem Problem, für eine Schaltvorrichtung der eingangs genannten Art eine verbesserte Ausführungsform anzugeben, die sich insbesondere durch eine einfache Handhabung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Schaltvorrichtung für ein automatisiertes oder automatisches Getriebe mit verschiedenen stabilen und instabilen Wählhebellagen eine stabile Wählhebellage E in Verlängerung und fluchtend zu den Stellungen P, R und N in der Schaltgasse anzuordnen, wobei die stabile Wählhebellage E im Kreuzungspunkt zwischen insgesamt vier instabilen Wählhebellagen liegt. Die vier instabilen Wählhebellagen werden einerseits durch zwei zu den Wählhebellagen P, R und N fluchtend angeordnete Tippstellungen zum schrittweisen oder mehrfachen Schalten gebildet und andererseits durch zwei in einer quer zur Schaltgasse verlaufenden Quergasse angeordneten Wählhebellagen D und M. Die vierte stabile Wählhebellage E stellt somit eine stabile Mittenlage dar, von der ausgehend nach links bzw. rechts das Umschalten auf den D- oder M-Modus möglich ist. Das instabile Hoch- bzw. Runterschalten der Gänge per Tippschaltung erfolgt durch Bewegen des Wählhebels in der P-, R-, N-Schaltgasse. Somit ist es möglich, aus der Wählhebelmittenlage E vier instabile Wählhebellagen durch Antippen in die entsprechende Richtung anzuwählen. Dabei sind die für den normalen Fahrbetrieb wesentlichen Schaltvorgänge, also das Rauf- bzw. Runterschalten der Vorwärtsgänge problemlos aus der stabilen Wählhebellage E ansteuerbar, wobei darüber hinaus durch ein einfaches Antippen des Wählhebels zwischen einem manuell schaltbaren Fahrbetrieb und einem Automatik-Fahrbetrieb gewechselt werden kann. Durch die vier um die Wählhebellage E herum angeordneten instabilen Wählhebellagen wird eine besonders einfache und leicht zu bedienende Schaltllorrichtung realisiert.

Gemäß einer vorteilhaften Ausführungsform der erfindungsgemäßen Lösung kann vorgesehen sein, dass der Wählhebel eine Schaltstange und einen damit koppelbaren Schaltkörper umfasst, wobei der Schaltstange eine erste Sperrvorrichtung und dem Schaltkörper eine zweite Sperrvorrichtung zugeordnet sind. Ist die erste Sperrvorrichtung entsperrt, ist die Schaltstange vom Schaltkörper derart entkoppelt, dass sie um eine Schwenkachse verschwenkbar ist. Demgegenüber ist bei gesperrter erster Sperrvorrichtung die Schaltstange mit dem Schaltkörper derart gekoppelt, dass sie bei gleichzeitig entsperrter zweiter Sperrvorrichtung gemeinsam mit dem Schaltkörper um die Schwenkachse verschwenkbar ist. Hierdurch lassen sich mit einem einzigen Wählhebel sowohl die instabilen Wählhebellagen als auch die stabilen Wählhebellagen sicher anwählen, wobei je nach Stellung der ersten bzw. zweiten Sperrvorrichtung entweder die Schaltstange alleine bewegt wird und damit die instabilen Wählhebellagen M, D sowie die Tippschaltung zum Rauf- und Runterschalten angewählt werden kann oder mit dem gesamten Wählhebel, also der Schaltstange und dem damit gekoppelten Schaltkörper die stabilen Wählhebellagen E, N, R und P anwählbar sind. Für einen Fahrer ergeben sich zwischen den instabilen Wählhebellagen und den stabilen Wählhebellagen somit ähnliche Schaltvorgänge bzw. -wege, so dass eine besonders einfache Bedienbarkeit der erfindungsgemäßen Schaltvorrichtung erreicht wird.

Gemäß einer weiteren vorteilhaften Ausführungsform kann beispielsweise vorgesehen sein, dass ein vierter Arm des Schaltkörpers einen Bolzen trägt, welcher mit einer Sperrkulisse eines Sperrhebels zusammenwirkt, und/oder wobei ein Aktuator vorgesehen ist, welcher den Sperrhebel zum Schwenken betätigt. Dabei sperrt der Aktuator im bestromten Zustand den Sperrhebel in der Wählhebellage N, während der Aktuator in stromlosem Zustand den Sperrhebel in der Wählhebellage P sperrt. Durch den Aktuator wird somit eine Key/Shift-Lock-Schaltung für die beiden stabilen Wählhebellagen P und N bereitgestellt, wodurch eine wirksame Absicherung gegen eine Fehlbedienung erreicht werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: ein Wählschema der erfindungsgemäßen Schaltvorrichtung,
- Fig. 2: einen Querschnitt durch die erfindungsgemäße Schaltvorrichtung,
- Fig. 3: eine Darstellung wie in Fig. 2, jedoch mit nicht geschnittenem Schaltkörper.

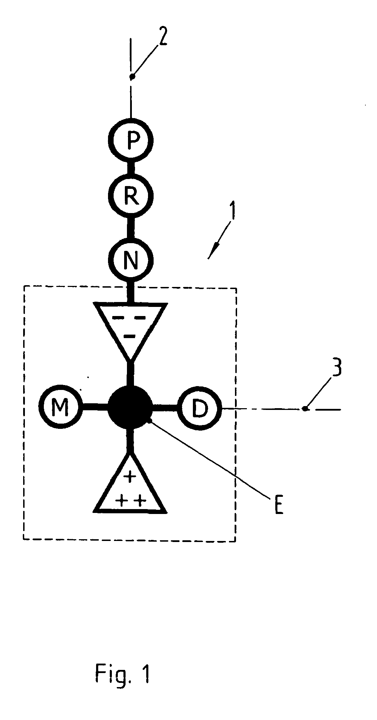

Entsprechend Fig. 1 weist ein Schaltschema einer erfindungsgemäßen Schaltvorrichtung 1 eine Schaltgasse 2 sowie eine quer dazu angeordnete Quergasse 3 auf. In der Schaltgasse 2 sind insgesamt vier stabile Wählhebellagen, nämlich P, R, N und E sowie zwei instabile Wählhebellagen + bzw. - zum schrittweisen oder mehrfachen Hoch - und Runterschalten der Gänge fluchtend angeordnet. Die Wählhebellage P steht für das Einlegen einer Parkbremse bzw. für eine Parkstellung. Die stabile Wählhebellage R bezeichnet einen Rückwärtsgang, während die stabile Wählhebellage N für eine neutrale Stellung, das heißt für die Unterbrechung der Drehmomentenübertragung im Getriebe (Leerlauf) steht. Die Wählhebellage E ist im Fahrbetrieb eingelegt, wobei aus der Wählhebellage E ein manuelles Schalten bzw. ein automatisches Schalten der Gänge direkt anwählbar ist. Die stabile Wählhebellage E ist fluchtend zu den weiteren stabilen Wählhebellagen P, R und N in der Schaltgasse 2 angeordnet und gleichzeitig zwischen zwei instabilen und zu den Wählhebellagen P, R und N fluchtend angeordneten Tippstellungen +, - zum schrittweisen oder mehrfachen Schalten gelegen. Dabei steht ein Plus für ein Einfach-Hochschalten der Gänge, während ein Plus-Plus für ein Mehrfach-Hochschalten der Gänge steht. Das Minus- bzw. das Doppelt-Minus steht sinngemäß für Einfach-Runterschalten bzw. ein Mehrfach-Runterschalten. Gleichzeitig liegt die stabile Wählhebellage E in der quer zur Schaltachse 2 verlaufenden Quergasse 3 zwischen den beiden instabilen und in der Quergasse 3 angeordneten Wählhebellagen D und M, welche für Drive, das heißt ein automatisches Schalten der Gänge und für Manuell, das heißt ein manuelles Schalten der Gänge steht. Aus der stabilen Wählhebellage E sind demnach vier instabile Wählhebellagen direkt anwählbar. Die stabile Wählhebellage E ist somit auch als stabile Mittenlage ausgebildet.

Die erfindungsgemäße Schaltvorrichtung 1 bietet den großen Vorteil, dass für einen normale Fahrbetrieb, das heißt beim Vorwärtsfahren des Fahrzeugs alle möglichen Schaltvorgänge direkt aus der Mittenlage, das heißt aus der stabilen Wählhebellage E ansteuerbar sind. So kann beispielsweise nach einem leichten Tippen nach links in den M-Modus, das heißt in den manuellen Schaltbetrieb, gewechselt werden und daraufhin über die beiden in der Schaltgasse 2 angeordneten instabilen Wählhebellagen +/hoch- bzw. runtergeschalten werden. Um ein automatisches Schalten der Gänge zu erreichen, muss ein Wählhebel 5 lediglich leicht nach rechts in die instabile Wählhebellage D angetippt bzw. bewegt werden.

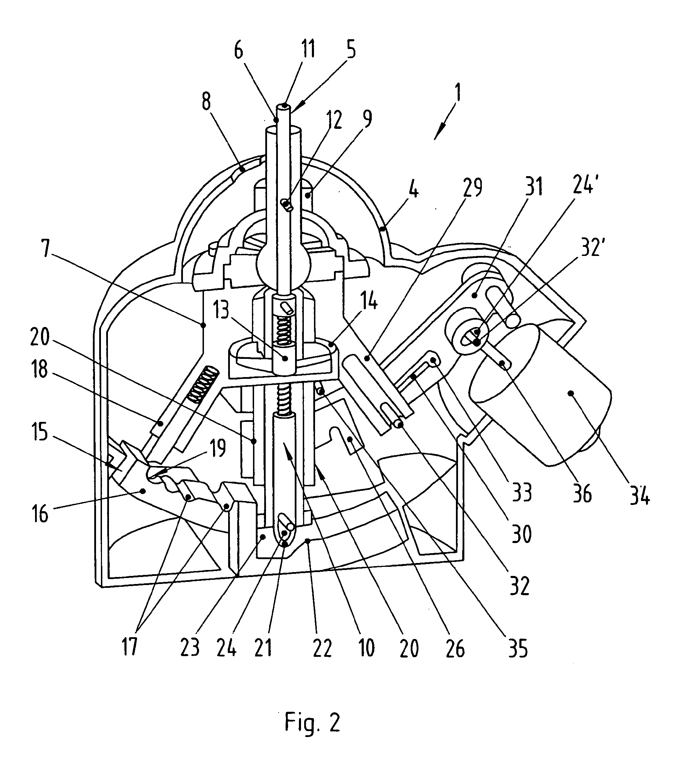

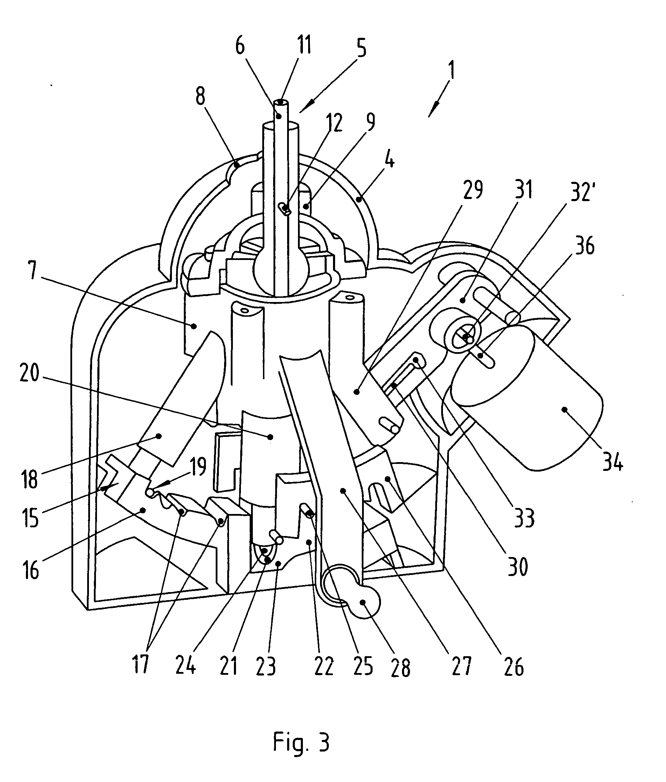

Im Folgenden soll kurz ein möglicher Aufbau der Schaltvorrichtung 1 anhand der Fig. 2 und 3 erläutert werden:
Entsprechend Fig. 2 weist die Schaltvorrichtung 1 ein Gehäuse 4 auf, welches eine darin enthaltene Schaltmechanik umgibt. Zum Anwählen der unterschiedlichen Gänge bzw. Schaltstellungen ist der Wählhebel 5, insbesondere ein Handwählhebel, vorgesehen, der eine Schaltstange 6 und einen damit koppelbaren Schaltkörper 7 umfasst. Der Wählhebel 5 ragt dabei über eine Öffnung 8 aus dem Gehäuse 4 heraus, und besitzt an einem nicht dargestellten und der Schaltvorrichtung 1 abgewandten Ende vorzugsweise eine Handhabe zum manuellen Betätigen des Wählhebels 5.

Der Schaltstange 6 ist eine erste Sperrvorrichtung 9 zugeordnet, während dem Schaltkörper 7 eine zweite Sperrvorrichtung 10 zugeordnet ist. Die erste Sperrvorrichtung 9 koppelt bzw. entkoppelt dabei die Schaltstange 5 vom Schaltkörper 7, während die zweite Sperrvorrichtung 10 den Schaltkörper 7 sperrt bzw. gegen ein Verstellen sichert. Bei entsperrter erster Sperrvorrichtung 9 ist die Schaltstange 6 vom Schaltkörper 7 derart entkoppelt, dass sie um eine nicht dargestellte Schwenkachse verschwenkbar ist und die vier instabilen Wählhebellagen +/-, D, M (vergleiche Fig. 1) ansteuerbar sind. Bei gesperrter erster Sperrvorrichtung 9 hingegen ist die Schaltstange 6 derart mit dem Schaltkörper 7 gekoppelt, dass sie bei gleichzeitig entsperrter zweiter Sperrvorrichtung 10 gemeinsam mit dem Schaltkörper 7 um die Schwenkachse verschwenkbar ist und sich dadurch die stabilen Wählhebellagen P, R, N und E ansteuern lassen. Die erste Sperrvorrichtung weist ein federbeaufschlagtes Druckorgan 11, beispielsweise eine Druckstange, auf, welches innerhalb der Schaltstange 6 angeordnet ist und in gedrücktem Zustand einen ersten Bolzen 12 derart verstellt, dass sich dadurch die erste Sperrvorrichtung 9 entsperrt und die Schalt- - stange 6 vom Schaltkörper 7 entkoppelt.

An dem der Handhabe des Wählhebels 5 abgewandten Ende weist die Schaltstange 6 einen federbeaufschlagten Gleitbolzen 13 auf, der in einer ersten Kulisse 14 geführt ist bzw. mit dieser zusammenwirkt. In der in Fig. 2 dargestellten Position steht der Wählhebel 5 in der stabilen Wählhebellage E, wobei die Schaltstange 6 vom Schaltkörper 7 entkoppelt ist. Durch die Entkopplung werden der Schaltstange 6 vier Bewegungsfreiheitsgrade erlaubt, nämlich in die Stellungen D und M und die dazu quer angeordneten Tippstellungen +/- zum schrittweisen oder mehrfachen Schalten. Dabei fährt der Gleitbolzen 13 innerhalb der Kulisse 14 in vier verschiedene Richtungen, was vorzugsweise von einem Sensor erfasst und an eine Getriebesteuerung bzw. das Getriebe selbst weitergeleitet wird. Die erste Kulisse 14 ist dabei gemäß Fig. 2 in den Schaltkörper 7 integriert.

Um zwischen den stabilen Wählhebellagen P, R, N und E wechseln zu können, muss, wie oben erwähnt, die erste Sperrvorrichtung 9 gesperrt sein und die zweite Sperrvorrichtung 10 entsperrt sein, so dass die Schaltstange 6 zusammen mit dem Schaltkörper 7 um die Schwenkachse verschwenkbar sind. Die genau definierten Stellungen der jeweiligen stabilen Wählhebellagen P, R, N und E werden dabei durch eine zweite Kulisse 15 vorgegeben, welche in einem ersten Kulissenbereich 16 entsprechende Ausnehmungen 17 aufweist und dadurch ein Erreichen und/oder Überfahren der stabilen Wählhebellagen P, R, N und E haptisch signalisiert. Dabei wirkt ein erster Arm 18 des Schaltkörpers 7 über eine endseitig an diesem angeordnete und gegen die zweite Kulisse 15 vorgespannte Rolle 19 mit dem ersten Kulissenbereich 16 der zweiten Kulisse 15 zusammen. Bei einem Überfahren des ersten Kulissenbereichs 16 der zweiten Kulisse 15 greift die vorgespannte Rolle 19 in die Ausnehmungen 17 ein und signalisiert dadurch dem Fahrer das Erreichen der jeweiligen stabilen Wählhebellage.

Ein zweiter Arm 20 des Schaltkörpers 7 trägt einen vorgespannten Achsstift 21, der mit einem zweiten Kulissenbereich 22 der zweite Kulisse 15 zusammenwirkt. Dabei weist der zweite Kulissenbereich 22 eine Vertiefung 23 auf, in welche der Achsstift 21 beim Erreichen der stabilen Wählhebellage E eingreift. Bei einem Verstellen des Schaltkörpers 7 aus der stabilen Wählhebellage E in eine beliebige andere stabile Wählhebellage leitet der Achsstift 21 aus der Vertiefung 23 heraus und wird entlang eines Langloches 24 in Richtung der ersten Kulisse 14 gedrückt. Hierdurch wird ein Verstellen der Schaltstange 6 in die instabilen Wählhebellagen +/-, D, M unterbunden. Des Weiteren trägt der zweite Arm 20 einen Arretierungsstift 25 (vergleiche Fig. 3), der mit einer dritten Kulisse 26 zusammenwirkt und den Schaltkörper 7 in den jeweiligen stabilen Wählhebellagen P, R, N und E arretiert. Die dritte Kulisse 26 trägt dabei ähnliche Ausnehmungen 17', wie der erste Kulissenbereich 16 der zweiten Kulisse 15.

Ein dritter Arm 27 des Schaltkörpers 7 (vergleiche Fig. 3) trägt einen Wählzuganschluss 28, welcher einen Wechsel zwischen den stabilen Wählhebellagen an das Getriebe bzw. eine Getriebesteuerung überträgt. Schließlich ist am Schaltkörper 7 noch ein vierter Arm 29 angeordnet, welcher mit einer Sperrkulisse 30 eines Sperrhebels 31 zusammenwirkt bzw. einen Bolzen 32 aufweist, welcher in der Sperrkulisse 30 geführt ist. Der Sperrhebel 31 ist dabei schwenkbar am Gehäuse 4 der Schaltvorrichtung 1 gelagert und weist in seiner Sperrkulisse 30 zumindest zwei selbsthemmende Raststellungen auf, wovon eine als Raststellung 33 bezeichnet ist.

Zum Betätigen bzw. Schwenken des Sperrhebels 31 ist ein Aktuator 34 vorgesehen, welcher im bestromten Zustand den Sperrhebel 31 in der Wählhebellage N sperrt, während er in stromlosem Zustand den Sperrhebel 31 in der Wählhebellage P sperrt. Der Aktuator 34 weist dabei einen Steuerstift 36 mit einem endseitigen Langloch 24' auf, in welchem ein Bolzen 32' des Sperrhebels 31 geführt ist. Hiermit ist eine wirksame Absicherung gegen eine Fehlbedienung durch ein sogenanntes Key-/Shift-Lock-System gegeben.

Um die jeweils angewählten Positionen des Schaltkörpers 7 bzw. der Schaltstange 5 zu erfassen, sind mehrere Sensoren 35 vorgesehen, wovon einer dargestellt ist, die bei Erreichen der jeweiligen Wählhebelstellung ein entsprechendes Signal über ein Bordnetz an die Getriebesteuerung weiterleiten. Selbstverständlich können auch in der ersten Kulisse 14 Sensoren zur Erfassung der jeweiligen instabilen Wählhebellage angeordnet sein.

Zusammenfassend stellt die erfindungsgemäße Schaltvorrichtung 1 somit ein Schaltschema zur Verfügung, bei welchem sämtliche stabile Wählhebellagen P, R, N und E fluchtend in einer Schaltgasse 2 angeordnet sind, und darüber hinaus die stabile Wählhebellage E einerseits zwischen zwei in der Schaltgasse 2 angeordneten instabilen Wählhebellagen +/- zum manuellen Hoch- und Runterschalten der Gänge und andererseits zwischen den beiden instabilen Wählhebellagen D und M, angeordnet ist. Die erfindungsgemäße Schaltvorrichtung 1 weist zum Ansteuern der stabilen Wählhebellagen P, R, N und E bzw. der instabilen Wählhebellagen +/-, M, D einen Wählhebel 5 auf, der zumindest eine Schaltstange 6 und einen damit koppelbaren Schaltkörper 7 umfasst. Zum Anwählen der stabilen Wählhebellagen P, R, N, E ist die Schaltstange 6 mit dem Schaltkörper 7 gekoppelt, wogegen sie beim Anwählen der instabilen Wählhebellagen +/-, M, D vom Schaltkörper 7 entkoppelt ist. * * * * *

## Patentansprüche

1. Schaltvorrichtung (1) für ein automatisiertes oder automatisches Getriebe, insbesondere eines Kraftfahrzeugs, mit einem Handwählhebel (5), der in folgende Wählhebellagen überführbar ist,
- eine stabile Wählhebellage P für das Einlegen einer Parkbremse,
- eine stabile Wählhebellage R für das Einlegen eines Rückwärtsgangs,
- eine stabile Wählhebellage N für die Unterbrechung der Drehmomentenübertragung im Getriebe,
- eine Wählhebellage D für ein die Vorwärtsgänge einbeziehendes selbsttätiges Schaltprogramm und
- eine Wählhebellage M für ein von Hand auslösbares Hoch- und Runterschalten +/-,
- wobei die Wählhebellagen P, R und N in einer Schaltgasse (2) fluchtend angeordnet sind,
**dadurch gekennzeichnet,**
- **dass** in Verlängerung und fluchtend zu den Wählhebellagen P, R und N in der Schaltgasse (2) eine weitere stabile Wählhebellage E angeordnet ist, welche in der Schaltgasse (2) zwischen zwei instabilen und zu den Wählhebellagen P, R und N fluchtend angeordneten Tippstellungen zum schrittweisen oder mehrfachen Hoch- und Runterschalten +/- liegt, und
- **dass** diese weitere stabile Wählhebellage E in einer quer zur Schaltgasse (2) verlaufenden Quergasse (3) zwischen den zwei instabilen in der Quergasse (3) angeordneten Wählhebellagen D und M liegt.

2. Schaltvorrichtung nach Anspruch 1,
**dadurch gekennzeichnet,**
- **dass** der Wählhebel (5) eine Schaltstange (6) und einen damit koppelbaren Schaltkörper (7) umfasst, und/oder
- **dass** der Schaltstange (6) eine erste Sperrvorrichtung (9) und dem Schaltkörper (7) eine zweite Sperrvorrichtung (10) zugeordnet sind, und/oder
- **dass** bei entsperrter erster Sperrvorrichtung (9) die Schaltstange (6) von dem Schaltkörper (7) entkoppelt ist, derart, dass sie um eine Schwenkachse verschwenkbar ist, während bei gesperrter erster Sperrvorrichtung (9) die Schaltstange (6) mit dem Schaltkörper (7) gekoppelt ist, derart, dass sie bei gleichzeitig entsperrter zweiter Sperrvorrichtung (10) gemeinsam mit dem Schaltkörper (7) um die Schwenkachse verschwenkbar ist, und/oder
- **dass** die erste Sperrvorrichtung (9) ein federbeaufschlagtes Druckorgan (11) aufweist, welches in der Schaltstange (6) angeordnet ist und in gedrücktem Zustand die erste Sperrvorrichtung (9) entsperrt und damit die Schaltstange (6) vom Schaltkörper (7) entkoppelt.

3. Schaltvorrichtung nach Anspruch 1 oder 2,
**dadurch gekennzeichnet,**
**dass** mit der vom Schaltkörper (7) entkoppelten Schaltstange (6) die stabile Wählhebellage E und die instabilen Wählhebellagen +/-, M, D schaltbar sind, während mit dem Schaltkörper (7) die stabilen Wählhebellagen P, R und N schaltbar sind.

4. Schaltvorrichtung nach einem der Ansprüche 1 bis 3,a
**dadurch gekennzeichnet,**
- **dass** die Schaltstange (6) schaltvorrichtungsseitig einen federbeaufschlagten Gleitbolzen (13) aufweist, welcher in einer ersten Kulisse (14) geführt ist, und/oder
- **dass** die erste Kulisse (14) der Schaltstange (6) vier Bewegungsfreiheitsgrade erlaubt, nämlich in die Stellungen D und M und die dazu quer angeordneten Tippstellungen zum schrittweisen oder mehrfachen Hoch- und Runterschalten +/-, und/oder
- **dass** die erste Sperrvorrichtung (9) in gesperrtem Zustand die vier Bewegungsfreiheitsgrade sperrt, und/oder
- **dass** die erste Kulisse (14) in den Schaltkörper (7) integriert ist.

5. Schaltvorrichtung nach einem der Ansprüche 1 bis 4,
**dadurch gekennzeichnet,**
- **dass** eine zweite Kulisse (15) vorgesehen ist, welche mit einem ersten Kulissenbereich (16) die stabilen Wählhebellagen P, R, N und E vorgibt und ein Erreichen und/oder Überfahren derselben haptisch signalisiert, und/oder
- **dass** ein erster Arm (18) des Schaltkörpers (7) eine vorgespannte Rolle (19) trägt, die mit dem ersten Kulissenbereich (16) der zweiten Kulisse (15) zusammenwirkt, und/oder
- **dass** ein zweiter Arm (20) des Schaltkörpers (7) einen vorgespannten Achsstift (21) trägt, der mit einem zweiten Kulissenbereich (22) der zweiten Kulisse (15) zusammenwirkt, und/oder
- **dass** der zweite Arm (20) des Schaltkörpers (7) einen Arretierungsstift (25) trägt, der mit einer dritten Kulisse (26) zusammenwirkt und den Schaltkörper (7) in den stabilen Wählhebellagen arretiert.

6. Schaltvorrichtung nach einem der Ansprüche 1 bis 5,
**dadurch gekennzeichnet,**
**dass** ein dritter Arm (27) des Schaltkörpers (7) einen Wählzuganschluss (28) trägt, welcher einen Wechsel der stabilen Wählhebellagen an das Getriebe überträgt.

7. Schaltvorrichtung nach einem der Ansprüche 1 bis 6
**dadurch gekennzeichnet,**
- **dass** ein vierter Arm (29) des Schaltkörpers (7) einen Bolzen (32) trägt, welcher mit einer Sperrkulisse (30) eines Sperrhebels (31) zusammenwirkt, und/oder
- **dass** der Sperrhebel (31) schwenkbar an einem Gehäuse (4) der Schaltvorrichtung (1) schwenkbar gelagert ist, und/oder
- **dass** ein Aktuator (34) vorgesehen ist, welcher den Sperrhebel (31) zum Schwenken betätigt,
- **dass** der Aktuator (34) in bestromtem Zustand den Sperrhebel (31) in der Wählhebellage N sperrt, während der Aktuator (34) in stromlosem Zustand den Sperrhebel (31) in der Wählhebellage P sperrt.

8. Schaltvorrichtung nach einem der Ansprüche 1 bis 7,
**dadurch gekennzeichnet,**
**dass** zumindest ein Sensor (35) vorgesehen ist, welcher das Erreichen zumindest der stabilen Wählhebellagen P, R, N und E erfasst und entsprechende elektrische Signale an eine Getriebesteuerung übermittelt.

## Claims

1. Shift device (1) for an automated or automatic transmission, in particular of a motor vehicle, having a manually operated selector lever (5) which can be moved into the following selector lever positions:
- a stable selector lever position P for engaging a parking brake,
- a stable selector lever position R for engaging a reverse gear,
- a stable selector lever position N for interrupting the transmission of torque in the transmission,
- a selector lever position D for an automatic shift program which encompasses the forward gears,
- a selector lever position M for manually triggerable upshifts and downshifts +/-,
- wherein the selector lever positions P, R and N are arranged in alignment in a shift gate (2),
**characterized**
- **in that**, in a projection of and in alignment with the selector lever positions P, R and N, there is arranged in the shift gate (2) a further stable selector lever position E which is situated in the shift gate (2) between two unstable tip positions, arranged in alignment with the selector lever positions P, R and N, for stepped or multiple upshifts and downshifts +/-, and
- **in that** said further stable selector lever position E is situated in a transverse gate (3), which runs transversely with respect to the shift gate (2), between the two unstable selector lever positions D and M arranged in the transverse gate (3) .

2. Shift device according to Claim 1,
**characterized**
- **in that** the selector lever (5) comprises a shift rod (6) and a shift body (7) that can be coupled to said shift rod, and/or
- **in that** the shift rod (6) is assigned a first blocking device (9) and the shift body (7) is assigned a second blocking device (10), and/or
- **in that**, when the first blocking device (9) is unblocked, the shift rod (6) is decoupled from the shift body (7) in such a way as to be pivotable about a pivot axis, whereas when the first blocking device (9) is blocked, the shift rod (6) is coupled to the shift body (7) in such a way that, when the second blocking device (10) is simultaneously unblocked, said shift rod is pivotable together with the shift body (7) about the pivot axis, and/or
- **in that** the first blocking device (9) has a spring-loaded pressure element (11) which is arranged in the shift rod (6) and which, when depressed, unblocks the first blocking device (9) and thus decouples the shift rod (6) from the shift body (7).

3. Shift device according to Claim 1 or 2,
**characterized**
**in that** the stable selector lever position E and the unstable selector lever positions +/-, M, D can be engaged by means of the shift rod (6) decoupled from the shift body (7), whereas the stable selector lever positions P, R and N can be engaged by means of the shift body (7).

4. Shift device according to one of Claims 1 to 3,
**characterized**
- **in that** the shift rod (6) has, at the shift device side, a spring-loaded sliding pin (13) which is guided in a first slotted guide (14), and/or
- **in that** the first slotted guide (14) of the shift rod (6) permits four degrees of freedom of movement, specifically into the positions D and M and the tip positions, arranged transversely with respect thereto, for stepped or multiple upshifts and downshifts +/-, and/or
- **in that** the first blocking device (9), in the blocked state, blocks the four degrees of freedom of movement, and/or
- **in that** the first slotted guide (14) is integrated in the shift body (7).

5. Shift device according to one of Claims 1 to 4,
**characterized**
- **in that** a second slotted guide (15) is provided which, by means of a first slotted guide region (16), predefines the stable selector lever positions P, R, N and E and haptically signals when these are reached and/or passed over, and/or
- **in that** a first arm (18) of the shift body (7) bears a preloaded roller (19) which interacts with the first slotted guide region (16) of the second slotted guide (15), and/or
- **in that** a second arm (20) of the shift body (7) bears a preloaded axial pin (21) which interacts with a second slotted guide region (22) of the second slotted guide (15), and/or
- **in that** the second arm (20) of the shift body (7) bears a locking pin (25) which interacts with a third slotted guide (26) and locks the shift body (7) in the stable selector lever positions.

6. Shift device according to one of Claims 1 to 5, **characterized in that** a third arm (27) of the shift body (7) bears a selector cable connection (28) which transmits a change of the stable selector lever positions to the transmission.

7. Shift device according to one of Claims 1 to 6,
**characterized**
- **in that** a fourth arm (29) of the shift body (7) bears a pin (32) which interacts with a blocking slotted guide (30) of a blocking lever (31), and/or
- **in that** the blocking lever (31) is mounted pivotably on a housing (4) of the shift device (1), and/or
- **in that** an actuator (34) is provided which actuates the blocking lever (31) so as to pivot the latter,
- **in that** the actuator (34), when energized, blocks the blocking lever (31) in the selector lever position N, whereas the actuator (34), when deenergized, blocks the blocking lever (31) in the selector lever position P.

8. Shift device according to one of Claims 1 to 7,
**characterized**
**in that** at least one sensor (35) is provided which detects when at least the stable selector lever positions P, R, N and E are reached and transmits corresponding electrical signals to a transmission controller.

## Revendications

1. Dispositif de changement de vitesse (1) pour une boîte de vitesses automatisée ou automatique, en particulier d'un véhicule automobile, comprenant un levier de sélection manuel (5) qui peut être transféré dans les positions de levier de sélection suivantes :
- une position de levier de sélection stable P pour l'enclenchement d'un frein de stationnement,
- une position de levier de sélection stable R pour l'enclenchement d'un rapport de marche arrière,
- une position de levier de sélection stable N pour interrompre le transfert de couple dans la boîte de vitesses,
- une position de levier de sélection D pour un programme de changement de vitesse automatique incluant les rapports de marche avant et
- une position de levier de sélection M pour un passage manuel à la vitesse supérieure ou inférieure +/-,
- les positions de levier de sélection P, R et N étant disposées en alignement dans une voie de sélection (2),
**caractérisé en ce que**
- dans le prolongement de, et en alignement avec les positions de levier de sélection P, R et N dans la voie de sélection (2) est disposée une position de levier de sélection stable supplémentaire E qui se situe dans la voie de sélection (2) entre deux positions de basculement instables disposées en alignement avec les positions de levier de sélection P, R et N, pour le passage à la vitesse supérieure ou inférieure pas à pas ou multiple +/-, et
- cette position de levier de sélection stable supplémentaire E se situe dans une voie transversale (3) s'étendant transversalement à la voie de sélection (2), entre les deux positions de levier de sélection instables D et M disposées dans la voie transversale (3).

2. Dispositif de changement de vitesse selon la revendication 1,
**caractérisé en ce que**
- le levier de sélection (5) comprend une tige de sélection (6) et un corps de sélection (7) pouvant être accouplé à celle-ci, et/ou
- la tige de sélection (6) est associée à un premier dispositif de blocage (9) et le corps de sélection (7) est associé à un deuxième dispositif de blocage (10), et/ou
- lorsque le premier dispositif de blocage (9) est débloqué, la tige de sélection (6) est désaccouplée du corps de sélection (7), de telle sorte qu'elle puisse pivoter autour d'un axe de pivotement, tandis que lorsque le premier dispositif de blocage (9) est bloqué, la tige de sélection (6) est accouplée au corps de sélection (7), de telle sorte qu'elle puisse pivoter conjointement avec le corps de sélection (7) autour de l'axe de pivotement lorsque le deuxième dispositif de blocage (10) est débloqué en même temps, et/ou
- le premier dispositif de blocage (9) présente un organe de pression (11) sollicité par ressort qui est disposé dans la tige de sélection (6) et qui, dans l'état pressé, débloque le premier dispositif de blocage (9) et donc désaccouple la tige de sélection (6) du corps de sélection (7).

3. Dispositif de changement de vitesse selon la revendication 1 ou 2,
**caractérisé en ce que**
la position de levier de sélection stable E et les positions de levier de sélection instables +/-, M, D peuvent être sélectionnées avec la tige de sélection (6) désaccouplée du corps de sélection (7), tandis que le corps de sélection (7) permet de sélectionner les positions de levier de sélection stables P, R et N.

4. Dispositif de changement de vitesse selon l'une quelconque des revendications 1 à 3,
**caractérisé en ce que**
- la tige de sélection (6) présente du côté du dispositif de sélection un boulon coulissant sollicité par ressort (13) qui est guidé dans une première coulisse (14), et/ou
- la première coulisse (14) de la tige de sélection (6) permet quatre degrés de liberté de mouvement, à savoir dans les positions D et M et les positions de basculement disposées transversalement à celles-ci, pour le passage à la vitesse supérieure ou inférieure pas à pas ou multiple +/-, et/ou
- le premier dispositif de blocage (9), dans l'état bloqué, bloque les quatre degrés de liberté de mouvement, et/ou
- la première coulisse (14) est intégrée au corps de sélection (7).

5. Dispositif de changement de vitesse selon l'une quelconque des revendications 1 à 4,
**caractérisé en ce que**
- l'on prévoit une deuxième coulisse (15) qui prédéfinit avec une première région de coulisse (16) les positions de levier de sélection stables P, R, N et E et signale haptiquement que ces positions ont été atteintes et/ou dépassées, et/ou
- un premier bras (18) du corps de sélection (7) porte un galet précontraint (19) qui coopère avec la première région de coulisse (16) de la deuxième coulisse (15), et/ou
- un deuxième bras (20) du corps de sélection (7) porte une goupille axiale précontrainte (21) qui coopère avec une deuxième région de coulisse (22) de la deuxième coulisse (15), et/ou
- le deuxième bras (20) du corps de sélection (7) porte une goupille d'arrêt (25) qui coopère avec une troisième coulisse (26) et qui bloque le corps de sélection (7) dans les positions de levier de sélection stables.

6. Dispositif de changement de vitesse selon l'une quelconque des revendications 1 à 5,
**caractérisé en ce**
**qu'**un troisième bras (27) du corps de sélection (7) porte un raccord de câble de sélection (28), qui transmet à la boîte de vitesses un changement de positions de levier de sélection stables.

7. Dispositif de changement de vitesse selon l'une quelconque des revendications 1 à 6,
**caractérisé en ce que**
- un quatrième bras (29) du corps de sélection (7) porte un boulon (32) qui coopère avec une coulisse de blocage (30) d'un levier de blocage (31), et/ou
- le levier de blocage (31) est monté de manière pivotante sur un boîtier (4) du dispositif de changement de vitesse (1) et/ou
- un actionneur (34) est prévu, lequel actionne le levier de blocage (31) pour le faire pivoter, et
- l'actionneur (34), dans l'état parcouru par un courant, bloque le levier de blocage (31) dans la position de levier de sélection N, tandis que l'actionneur (34), dans l'état non parcouru par un courant, bloque le levier de blocage (31) dans la position de levier de blocage P.

8. Dispositif de changement de vitesse selon l'une quelconque des revendications 1 à 7,
**caractérisé en ce que**
l'on prévoit au moins un capteur (35) qui détecte qu'au moins les positions de levier de sélection stables P, R, N et E ont été atteintes, et qui transmet des signaux électriques correspondants à une commande de boîte de vitesses.
